# EUROPÄISCHE PATENTSCHRIFT

(11) **EP 1 432 631 B1**
(45) Veröffentlichungstag und Bekanntmachung des Hinweises auf die Patenterteilung: **25.10.2006**
(21) Anmeldenummer: 01974216.2
(22) Anmeldetag: 29.08.2001
(51) Int. Cl.: B65H 19/10

(54) **MASCHINELL ERKENNBARES KLEBEBAND**
MACHINE-DETECTABLE ADHESIVE TAPE
BANDE ADHESIVE DETECTABLE PAR MACHINE

(43) Veröffentlichungstag der Anmeldung: 30.06.2004
(73) Patentinhaber: tesa AG, 20253 Hamburg (DE)
(72) Erfinder: EIKMEIER, Markus, 22297 Hamburg (DE); GEBBEKEN, Bernhard, 21075 Hamburg (DE); GASSNER, Thomas, 25436 Heidgraben (DE); NAGEL, Christoph, 22529 Hamburg (DE); BURMEISTER, Axel, 21244 Buchholz (DE)
(86) Internationale Anmeldenummer: PCT/EP2001/009965
(87) Internationale Veröffentlichungsnummer: WO 2003/018453

(56) Entgegenhaltungen:
- EP-A- 0 970 905
- EP-A- 1 022 245
- WO-A-94/11846
- DE-A- 19 837 689
- FR-A- 2 769 109

## Beschreibung

Die Erfindung betrifft ein Klebeband für den fliegenden Rollenwechsel von auf Rollen aufgewickeltem Flachbahnmaterial, ausgerüstet mit zumindest einem klebenden spaltbaren System, sowie ein Spliceverfahren für den fliegenden Rollenwechsel von auf Rollen aufgewickelten Flachbahnmaterial.

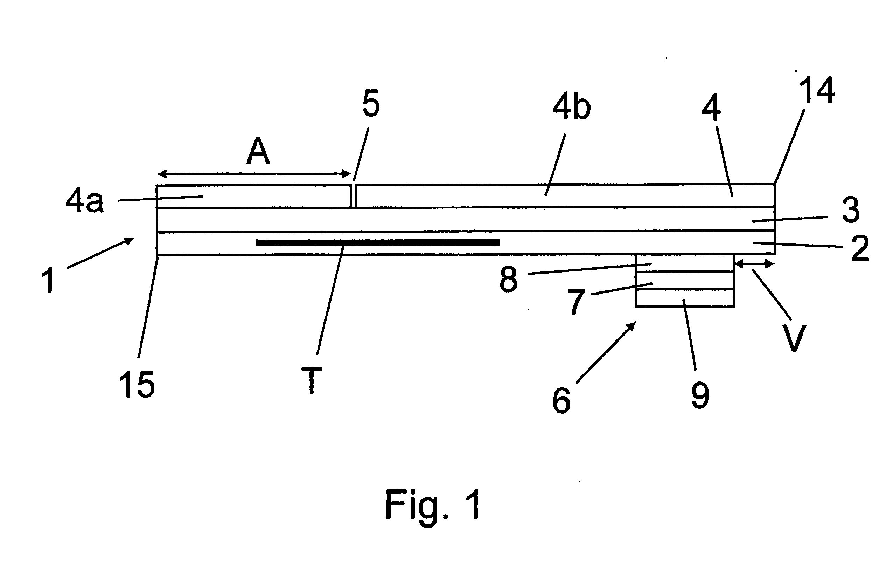

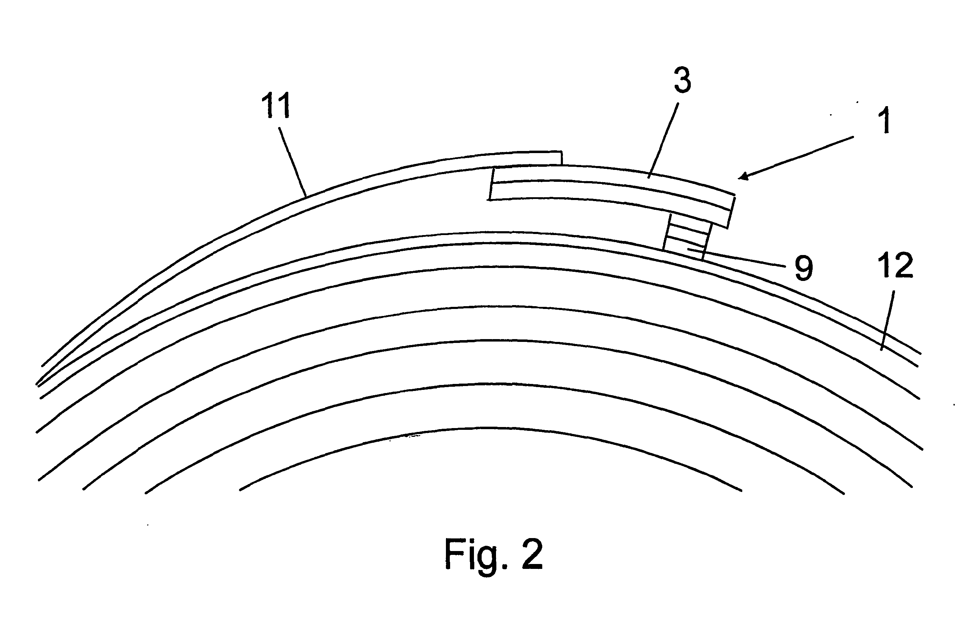

Der fliegende Rollenwechsel ist in Papierfabriken oder dergleichen ein gängiges Verfahren, um eine alte, fast abgespulte Papierrolle durch eine neue zu ersetzen, ohne die schnell laufenden Maschinen anhalten zu müssen. Das Ende der alten Papierbahn wird dabei mit dem Anfang der neuen Papierbahn verklebt, um einen möglichst kontinuierlichen Betrieb zu gewährleisten. Hierfür werden doppelseitig klebende Selbstklebebänder, sogenannte Fixe, eingesetzt, die einerseits hochklebrig und -tackig sind, andererseits aber aufgrund ihrer wasserlöslichen Selbstklebemassen und Papierträger beim Wiedereinsatz der Papierabfälle in der Papiermaschine nicht stören.
Klassisch werden die Fixe in Handarbeit am Bahnanfang verklebt, dieser Prozeß erfordert den Einsatz von Fachpersonal und führt zu technisch nicht vorteilhaften Ergebnissen, da die Verklebungen durch die Abfolge von Papierbahnen und Klebestreifen relativ dick sind.
Für die Verklebung beim fliegenden Rollenwechsel sind diverse Produkte erhältlich, insbesondere solche, welche neben einem Papierträger eine wasserlösliche Selbstklebemasse beidseits beschichtet aufweisen.
Aus der EP 418 527 A2 ist ein Verfahren zum Vorbereiten einer Bedruckstoffbahnrolle in einem Rollenwechsler einer Rotationsdruckmaschine bekannt, bei dem Klebestreifen verwendet werden, die in drei Zonen unterteilt sind (Sp. 3, Z. 12 ff. und Fig. 1 und 2), wobei die mittlere Zone 6 perforiert ist. An dieser Perforierung findet dann das Aufreißen statt.
In der Praxis haben derartige Klebebänder jedoch gravierende Nachteile, insbesondere durch nach dem Splice vorliegende klebende Flächen.

Es ist aus DE 196 28 317 A1 aber auch bereits ein Klebeband für derartige Anwendungen bekannt, bei dem nach erfolgten Splice keine klebenden Flächen mehr auftreten, indem dort ein spaltfähiger Papierträger zum Einsatz kommt, der beim Splice spaltet und nach erfolgtem Splice die Klebmassen abdeckt. Auch aus DE 196 32 689 A1 ist ein ähnliches Klebeband für diese Anwendung bekannt, wobei hier jedoch ein spaltfähiger Papierträger eingesetzt wird, der über die gesamte Breite des Klebebandes spaltet.

Das nichtklebende Abdecken von sonst offen liegenden klebenden Bereichen offenbart DE 196 32 689 A2. Hier wird ein Klebeband für dynamische Belastungen beim Spliceverfahren beschrieben, dessen Papierträger spaltet und mit seinen Resten die Klebemassen abdeckt.

Die DE 198 30 673 zeigt ein Klebeband für den fliegenden Rollenwechsel in Papierveredelungsmaschinen oder dergleichen, welches einen beidseitig mit einer wasserlöslichen Selbstklebemasse beschichteten Papierträger aufweist. Ein Randbereich der Rückseite des Klebebandes ist mit einem einseitig klebenden Klebeband ausgerüstet, welches seinerseits einen spaltfähigen Papierträger aufweist.
Eine weitere Variante ist in DE 198 30 674 beschrieben. Hier ist ein Klebeband mit zwei Spaltstreifen dargestellt.

Auch die DE 199 02 179 A1 zeigt ein Klebeband für ein Spliceverfahren. Dieses Klebeband trägt an seiner nichtklebenden Rückseite ein doppelseitiges Klebeband, welches einen spaltfähigen Papierträger aufweist, der beim Spliceverfahren spaltet und die jeweiligen Kleber abdeckt. Zur Vermeidung von Reißern beim fliegenden Rollenwechsel ist das aufkaschierte Klebeband mit einem Papierträger aus Spaltpapier eingerückt angeordnet, nämlich in einem gewissen Abstand von der Längskante des Klebebandes.

Aufgabe der Erfindung ist es, ein Klebeband und ein Spliceverfahren zur Verfügung zu stellen, welches die Nachteile des Standes der Technik nicht oder nur in verminderter Weise aufweist und welches eine automatisierte Steuerung des Spliceverfahrens erlaubt.

Gelöst wird diese Aufgabe überraschend und für den Fachmann nicht vorhersehbar durch ein Klebeband, wie es im Hauptanspruch dargestellt ist, sowie durch ein Verfahren, wie es in Anspruch 5 dargestellt ist. Die Unteransprüche betreffen vorteilhafte Ausführungsformen des erfinderischen Klebebandes sowie Weiterentwicklungen des erfinderischen Verfahrens.

Entsprechend dem vorstehend gesagten betrifft der Anspruch 1 ein Klebeband für den fliegenden Rollenwechsel von auf Rollen aufgewickeltem Flachbahnmaterial, wobei das Klebeband zumindest ein klebendes spaltbares System aufweist. Erfindungsgemäß ist dieses Klebeband mit zumindest einem mittels eines Detektors erkennbarenTransponder ausgerüstet.
Die Erfindung bietet somit ein Klebeband an, welches die Funktion des ansonsten später aufgeklebten Signaletikettes in sich integriert hat.

Transponder sind mikroelektronische Schaltkreise. Sie bieten den Vorteil, in sich geschlossen zu sein und weisen eine hohe Resistenz gegen Störungseinflüsse wie Temperatur, Druck, Stöße, Chemikalien, Feuchtigkeit und dergleichen auf. Sie bieten daher große Vorteile für die Anwendung in Papierverarbeitungsanlagen, wo sie auch bei maschineller Verarbeitung des mit dem Transpondersystem versehenen Papiers eine hohe Zuverlässlgkleit in ihrer Funktion aufweisen.

Sehr vorteilhaft wird ein Klebeband verwendet, welches zumindest einen Hauptträger mit zumindest einer Schicht einer Selbstklebemasse auf der Oberseite aufweist. Auf der Unterseite des Klebebandes befindet sich das spaltbare System, bevorzugt in Form eines Streifens, das auf der offenliegenden Seite ebenfalls selbstklebend ausgerüstet ist. Dieses spaltbare System spaltet beim Splice in der Art, daß keine klebrigen Rückstände verbleiben und den Maschinendurchgang des Splices behindern.
Für den Aufbau des erfindungsgemäßen Etikettes können prinzipiell alle Klebebänder eingesetzt werden, welche sich für den fliegenden Rollenwechsel ("Easy Splice") einsetzen lassen. Hier sei beispielsweise verwiesen auf die DE 196 28 317 A1, (DE 196 32 689 A1), DE 198 30 673 A1, DE 198 30 674 A1, DE 198 41 609 A1, DE 199 02 179 A1, EP 0 757 657 B1.

In einer bevorzugten Erweiterung der Erfindung ist der Hauptträger des Klebebandes derart ausgerüstet, daß er für die maschinelle Erkennung dient und somit mit dem Transponder ausgerüstet ist. Der Transponder kann dabei vorteilhaft in das Trägermaterial eingearbeitet sein.

In einer weiteren Ausführungsform des erfinderischen Klebebandes befindet sich der Transponder in einer zusätzlichen Schicht in dem Klebeband.

Als Transponder eignen sich für das erfinderische Klebeband besonders bevorzugt Dünnschichttransponder. Als Detektoren lassen sich entsprechende Leseantennen einsetzen.

Das erfinderische Klebeband wird beim Beschleunigen der Papierrolle detektiert und somit der Splicevorgang zum richtigen Zeitpunkt ausgelöst, weiterhin wird der Transponder in der sogenannten Makulaturweiche erkannt beziehungsweise gelesen, bei der die Papiermenge aussortiert wird, welche den Splice enthält. Das erfinderische Klebeband übernimmt somit Funktionen, welche bisher durch zusätzliche Etiketten oder Markierungen gewährleistet wurden, und bietet zusätzliche Vorteile für den Verarbeitungsprozeß. Durch die bisher verwendeten Etiketten sind Fehlerquellen bedingt, da der Signalgeber und das Splice-Klebeband genau zueinander justiert werden müssen.
Bei bisherigen Verfahren wird die Erkennung standardmäßig durch ein aluminisiertes Etikett gewährleistet. Dabei besteht die Gefahr, daß das Etikett falsch positioniert wird, hierdurch können mehrere Probleme auftreten.
Zum einen kann das Etikett außerhalb des Erkennungsfeldes des Detektor geklebt sein. Dabei erkennt der Rollenwechsler dann nicht die Klebestelle und es kommt nicht zum Rollenwechsel, das heißt es muß die Maschine angehalten werden, das Papier muß manuell in die Druckmaschine eingezogen werden.
Zum zweiten muß der Abstand zwischen Klebestelle und aluminisiertem Etikett genau definiert sein und auch genau eingehalten werden. Stimmen diese Abstände nicht, wird die alte Papierbahn entweder zu früh oder zu spät abgeschnitten. Beim zu frühen Abschneiden kann es passieren, daß die Verklebung zwischen neuer Rolle und ablaufender Bahn noch nicht ausreichend stattgefunden hat, so kommt es dann zu einem Abriß, der auch wieder Maschinenstillstände zur Folge hat. Wird die alte Bahn zu spät abgeschnitten, verlängert sich der überstehenden Papierrest, die s.g. Fahne. Eine zu lange Fahne kann im weiteren Verarbeitungsprozeß, wie dem Drucken aus der Papierbahn herausragen und an Umlenkrollen oder im Druckwerk hängen bleiben und so zu Störungen oder Abrissen führen.
Somit führen zum einen Ungenauigkeiten beim Verkleben zu einer gestörten Funktionsweise, zum anderen sind Fehlfunktionen darin begründet, daß das Signaletikett abfällt oder auf der Rolle "verrutscht". Weiterhin ist durch das Signaletikett eine zusätzliche Verklebung gegeben, bei welcher bei teilweisem Ablösen des Etiketts Klebeflächen unkontrolliert freiliegen können und den Papierverarbeitungsprozeß stören, beispielsweise das Papier unkontrolliert miteinander verkleben.
Durch die Integration der Schaltfunktion direkt in das Spüce-Klebeband konnte die Splicesicherheit gegenüber dem bisherigen Vorgehen deutlich erhöht werden, es wurden wesentlich weniger Fehlfunktionen festgestellt.
Ein zusätzlicher Vorteil der Erfindung liegt darin, daß über das Splice-Klebeband kontaktlos Informationen an das Prozeßcontrolling weitergegeben werden können, beispielsweise Angaben zur aktuellen Rotationsgeschwindigkeit der neuen Rolle. Die Erfindung erlaubt es also auch, bei Fehlfunktionen der Apparatur, beispielsweise einer nicht korrekt laufenden neuen Rolle (falsche Geschwindigkeit, Unwucht oder dergleichen), einen Notstop zu initiieren oder andere Maßnahmen zur Korrektur des Fehlers einzuleiten.
Neben der eigentlichen Detektionswirkung lassen sich zusätzlich Informationen übermitteln, beispielsweise Angaben über Art oder Bahnstärke der neuen Rolle. So kann bei Einsatz von Rollen unterschiedlicher Art oder Beschaffenheit die Verarbeitungsanlage automatisch auf die neuen Verarbeitungsbedingungen eingeregelt werden, ohne daß es einer weiteren äußeren Steuerung bedarf. Hieraus ergibt sich weiterhin der Vorteil, daß bereits im Vorfeld der eigentlichen Verarbeitung weitere Prozesse durch automatische Erkennung der derart vorbereiteten Rollen gesteuert werden können, so beispielsweise die Lagerung und die Lagerverwaltung, die Papiervorbereitung oder dergleichen.
Als Transponder lassen sich passive und aktive Transponder einsetzen. Letztere bieten den Vorteil, daß sie vor oder während des Papierverarbeitungsprozesses Informationen aufnehmen können und so eine "dynamische" Überwachung und Steuerung erlauben. Hierzu wird satt des einfachen Lesedetektors eine Lese- und Schreibeantenne eingesetzt.

Als Hauptträger wird bevorzugt wird ein reißfester Papier- oder Folienträger eingesetzt. Als Trägermaterialien seien hier beispielsweise angeführt: schwach gekreppte Papiere, maschinenglatte Rohpapiere, einseitig gestrichene glatte Rohpapiere, beidseitig gestrichene, verdichtete, bedruckbare Decorepapiere, einseitig doppelt (zweifach) gestrichene, holzfreie, hochglänzende Kraftpapiere, ohne sich durch diese Beispiele in der Wahl der Trägermaterialien unnötig einschränken zu wollen.

Es sei darauf hingewiesen, daß auch spaltfähige Klebebänder im Sinne der DE 196 32 689 A1, bei denen der (Haupt-)Träger des Klebebandes selbst spaltet, eingesetzt werden können. Hierbei ist dann der spaltfähige Träger entsprechend dem weiter oben gesagten detektierbar zu gestalten.

Vorteilhaft wird ein spaltfähiges System eingesetzt, welches eine deutlich geringere Spaltfestigkeit als ein Papierträger aufweist, welcher Zugkräfte aufnehmen muß. Das oder die spaltbaren Systeme basieren bevorzugt auf geleimtem hochverdichtetem Papier, auf einem Verbund aus Papier und Folie oder auf einem Verbund aus zwei Folien, wobei der Verbund aus definiert punkt- und/oder linienförmig verbundenen Papieren und/oder Folien bestehen kann. Hierfür kommen beispielsweise insbesondere folgende Papiere, Papierverbundsysteme oder Folien in Frage:
- leicht spaltbare Papiersysteme, z. B. nicht naßfeste Papiere
- Duplexpapiere (definiert zusammenlaminierte Papiere, der Spaltvorgang verläuft extrem homogen; es entstehen keine Spannungsspitzen, z. B. durch inhomogene Verdichtung. Diese Papiere werden zur Herstellung von Tapeten und Filtern eingesetzt.)
- Definiert zusammengeleimte hochverdichtete Papiere (Papiere mit einer hohen Spaltfestigkeit). Die Leimung kann beispielsweise mit Stärke, stärkehaltigen Derivaten, Tapetenkleister auf Basis von Methylcellulose (tesa® Kleister , tesa AG, Hamburg; Methylan®, Henkel KgaA, Düsseldorf) oder auch auf Basis von Polyvinylalkoholderivaten erfolgen. Beschrieben werden solche Systeme beispielsweise in der EP 0 757 657 A1.
- Spaltfähige Systeme, bei welchen die Spaltkräfte über die Größe der Verklebungspunkte bestimmt werden; solche Systeme werden beispielsweise in der DE 198 41 609 A1 beschrieben.
- Koextrudierte Folien.

Es ist besonders vorteilhaft, wenn die Spaltfestigkeit des Spaltsystems 5 bis 70 cN/cm, insbesondere 12 bis 60 cN/cm beträgt. Zur Spaltfestigkeit und ihrer Messung wird auf die DE 199 02 179 A1 verwiesen.

In einer sehr vorteilhaften Ausführungsform beträgt der Abstand (V) des doppelseitig klebenden Klebebandes (6) zur Vorderkante (Längskante 14) des Hauptträgers bis zu 15 mm, insbesondere 0,5 bis 15 mm, bevorzugt 1 bis 7 mm, sehr bevorzugt 1,5 bis 3,5 mm.

Werden mehrere spaltbare Systeme auf das Klebeband aufgebracht, so beträgt der Abstand der spaltbaren Systeme zueinander vorteilhaft 3 bis 50 mm. Bevorzugt werden Abstände von 25 bis 45 mm, ganz besonders Abstände von 30 bis 40 mm gewählt.

Das oder die spaltbaren Systeme haben vorteilhaft die gleiche Breite wie der Hauptträger. In einer weiteren günstigen Ausführungsform hingegen ist es von Vorteil, wenn der Hauptträger breiter als die spaltbaren Systeme ist.
Die Breite des spaltbaren Systems beträgt bevorzugt 3 bis 40 mm, insbesondere 6 bis 12 mm.

Die vorteilhafte Einrückung des spaltbaren Materials (Abstand V) im Bereich der vorderen Längskante 14 beträgt bis zu 15 mm, insbesondere 0,5 bis 15 mm, bevorzugt 1 bis 7 mm, sehr bevorzugt 1,5 bis 3,5 mm.

Bei mehreren spaltfähigen Systemen auf dem Klebeband können diese aus dem gleichen Material bestehen und somit gleiche Spaltkräfte aufweisen, es kann aber auch von Vorteil sein, die spaltfähigen Systeme aus unterschiedlichem Material vorzusehen, so daß diese unterschiedliche Spaltkräfte besitzen.

In einer sehr bevorzugten Ausführungsform der Erfindung wird als Selbstklebemasse (im Sinne der Selbstklebemassen entsprechend der Positionsziffern 3, 8 und/oder 9 der Figuren) eine Acrylathaftklebemasse eingesetzt. Es können vorteilhaft sowohl wasserlösliche als auch wasserunlösliche Acrylate eingesetzt werden.
Weiterhin lassen sich auch Natur- und Synthesekautschukmassen als auch Dispersionen der vorstehend beschriebenen Verbindungen einsetzen. Es sei darauf verwiesen, daß prinzipiell alle Basistypen von Haftklebemassen, welche die erfinderischen Kriterien erfüllen, eingesetzt werden können.

In einer weiteren bevorzugten Ausführungsform ist die Selbstklebemasse mit einer Abdeckung versehen, die gegebenenfalls mit einer Perforation oder einem Schlitz in Längsrichtung versehen ist. Der Schlitz kann bevorzugt in einem Abstand A von 20 bis 40 mm von der Längskante 15 des Klebebands vorgesehen sein, welche der vorderen Längskante 14 gegenüber liegt, in deren Nähe das spaltfähige System 6 angeordnet ist.

Das Klebeband kommt in Rollenwechslern und Makulaturweichen zum Einsatz, bei denen die Spliceerkennung berührungslos erfolgt. Das Klebeband wird bevorzugt eingesetzt in Verfahren, wie sie im folgenden näher beschrieben werden.

Die Erfindung betrifft weiterhin ein Spliceverfahren für den fliegenden Rollenwechsel von auf Rollen aufgewickelten Flachbahnmaterial, bei welchem die oberste Papierbahn einer neuen Rolle mit einem Klebeband, welches mit zumindest einem Hauptträger, zumindest einer Schicht einer Selbstklebemasse auf der Oberseite und zumindest einem spaltfähigen System auf der Unterseite ausgerüstet ist, an der darunterliegenden Bahn fixiert wird und ein zum Spliceverfahren benötigter Teil der Selbstklebemasse offenliegt, woraufhin die so ausgerüstete neue Rolle neben eine fast gänzlich abgespulte zu ersetzende alte Rolle plaziert wird und auf die im wesentlichen gleiche Drehgeschwindigkeit wie diese beschleunigt wird, dann gegen die alte Bahn gedrückt wird, wobei die offenliegende Selbstklebemasse des Klebebandes mit der alten Bahn bei im wesentlichen gleichen Geschwindigkeiten der Bahnen verklebt, während zugleich das spaltfähige System derart spaltet, daß nach dem Spaltvorgang keine klebenden Bereiche offenliegen, und wobei der Zeitpunkt des Splicevorganges durch einen Detektor bestimmt wird, und wobei insbesondere das Klebeband oder zumindest ein Teil hiervon einen Transponder aufweist, welcher durch den Detektor maschinell erkannt wird.

In einer Weiterentwicklung des erfinderischen Verfahrens wird das Klebeband rechtwinklig zur laufenden Papierbahn verklebt. In vorteilhafte Varianten des erfinderischen Verfahrens kann die Verklebung des Klebebandes auch in einem spitzen Winkel von bis zu 30° zur laufenden Papierbahn, insbesondere von bis zu 10° erfolgen.

Bei dem Spliceverfahren wird ein Klebeband in einer geraden Linie unter die oberste Bahn auf eine neue Papierrolle verklebt, so daß ein Teil des Klebebandes frei bleibt, während die Unterseite des Klebebandes mit der darunter liegenden Bahn verklebt und damit die oberste Bahn sichert, wobei gegebenenfalls zunächst nur ein Teil der gegebenenfalls auf der Selbstklebemasse befindlichen Abdeckung abgezogen wurde, so daß der zum Spliceverfahren benötigte Teil der Selbstklebemasse noch mit der Abdeckung abgedeckt ist und die Rolle in diesem Zustand keine freie klebende Fläche aufweist, worauf zur abschließenden Vorbereitung des Spliceverfahrens die gegebenenfalls noch vorhandene restliche Abdeckung entfernt wird, worauf die so ausgerüstete neue Rolle neben eine fast gänzlich abgespulte, zu ersetzende alte Rolle plaziert wird und auf die gleiche Drehgeschwindigkeit wie diese beschleunigt wird, dann gegen die alte Bahn gedrückt wird, wobei die offenliegende Selbstklebemasse des Klebebandes mit der alten Bahn bei im wesentlichen gleichen Geschwindigkeiten der Bahnen verklebt, während zugleich der Spaltträger aus spaltfähigem Material spaltet und beide Selbstklebemassen, die auf ihm beschichtet waren, mit seinen Resten nichtklebend abdeckt.
Nach dem Kontakt des Klebebandes mit der ablaufenden Bahn kommt es also zum Spalten des spaltbaren Systems des Klebebandes, so daß die oberste Papierlage der neuen Rolle freigegeben wird und kein klebrigen Rückstände mehr offen vorliegen.

Im folgenden soll die Erfindung anhand eines Ausführungsbeispiels näher beschrieben werden, ohne sie damit aber unnötig einschränken zu wollen. Es zeigen:
- Fig. 1: eine seitliche, schematische Ansicht eines erfindungsgemäßen Klebebandes mit mit einem Transponder
- Fig. 2: eine seitliche, schematische Ansicht eines Klebebandes gemäß Fig. 1, aufgeklebt auf eine Papierrolle und fertig für den fliegenden Rollenwechsel
- Fig. 3: eine Ansicht gemäß Fig. 2, aber nach erfolgtem fliegenden Rollenwechsel

Im einzelnen zeigt Fig. 1 ein Klebeband 1 mit einem Hauptträger 2, einseitig beschichtet mit einer wasserlöslichen Selbstklebemasse 3. Der Hauptträger 2 besteht aus schwach gekrepptem Papier, in welchen ein Transponder T integriert ist. Die Gesamtdicke des Hauptträgers 2 mit Selbstklebemasse 3 beträgt 0,088 mm, die Breite 150 mm.
Abgedeckt ist die Selbstklebemasse 3 mit einem silikonisierten Trennpapier 4, das in 30 mm Abstand vom linken Rand mit einem Schlitz 5 versehen ist, so daß zunächst der linke Teil 4a des Trennpapiers 4 abgenommen werden kann, dann der rechte Teil 4b.
Im Bereich des rechten Endes des Klebebandes 1 ist ein Streifen eines doppelseitig klebenden Klebebandes 6 unterklebt, bestehend aus einem Papierträger 7 aus Spaltpapier, beidseits beschichtet mit wasserlöslicher Selbstklebemasse 8 bzw. 9. Das Klebeband hat eine Breite von 9 mm.

In Fig. 2 ist dargestellt, wie ein solches Klebeband 1 unter eine Papierbahn 11 einer neuen Papierrolle geklebt ist, und zwar mit dem linken Teil, nachdem von diesem der Teil 4a des Trennpapiers 4 abgezogen wurde. Vorher wurde das Klebeband mit den freiliegenden Selbstklebemasse 9 auf die unter der Papierbahn 11 liegende Papierbahn 12 der Papierrolle verklebt. Auch der rechte Teil 4b des Trennpapiers 4 wurde abgezogen, so daß die so ausgerüstete Papierrolle fertig für einen fliegenden Rollenwechsel ist, wobei die Verklebung des Klebebandes 1 im rechten Winkel über die Rolle läuft.
Die Selbstklebemasse 3 liegt nun offen und stellt für den fliegenden Wechsel die Kontaktfläche zu ablaufenden Bahnen dar. Die Kontaktfläche hat eine Breite von 120 mm und erstreckt sich über die gesamte Breite der Papierrolle.

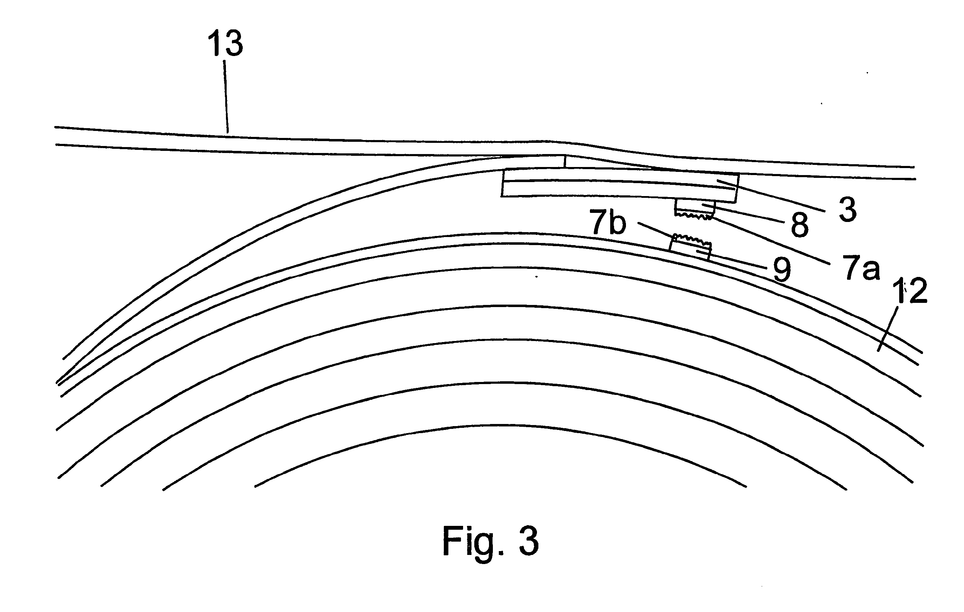

Die so ausgerüstete (neue) Papierrolle wird neben die abgewickelte (alte) Papierrolle gebracht, an die die neue angesetzt werden soll. Die neue Papierrolle wird auf eine Drehgeschwindigkeit beschleunigt, die der Geschwindigkeit der ablaufenden Bahn nahezu entspricht. Sind beide Geschwindigkeiten ausreichend synchronisiert, kann der Wechsel vollzogen werden. Dabei wird die Klebestelle mittels eines Detektors, welcher sich am Rollenwechsler befindet, detektiert und die Position exakt lokalisiert.
Die ablaufende Bahn 13 wird mittels Andruckwalze (nicht dargestellt) mit dem Umfang der neuen Rolle in Kontakt gebracht und die Selbstklebemasse 3 gemäß Fig. 3 mit der ablaufenden Papierbahn 13 verklebt. Mittels des Detektors und der Signalfunktion des Klebebandes wird der genaue Zeitpunkt festgestellt, an zu dem die ablaufende Papierbahn gegen die neue Papierrolle gedrückt wird, und das Abschneiden der alten Papierbahn geregelt. Augenblicklich nach dem Klebekontakt spalten die spaltfähigen Papierträger 7 derart, daß ein Teil 7a auf dem Klebeband 1 verbleibt und dort die Selbstklebemasse 8 abdeckt, während der andere Teil 7b auf der Selbstklebemasse 9 verbleibt, welche auf der Papierbahn 12 klebt. Damit sind beide Selbstklebemasse 8 und 9 gewissermaßen neutralisiert, kleben nicht mehr und stören damit auch nicht im weiteren Prozeß in den Papierverarbeitungsmaschinen.
Im weiteren Verlauf des Verarbeitungsprozesses wird der Bereich des Papiers mit der Klebestelle aussortiert, damit diese in der weiteren Funktion des Papiers nicht stört (so wird in Druckmaschinen beispielsweise verhindert, daß keine Zeitungen mit Verklebungsstellen in den Verkauf gelangen). Die Aussortierung geschieht an der sogenannten Makulaturweiche. Auch hier wird die Klebestelle über den integrierten Transponder berührungslos erkannt und das entsprechende Papierstück maschinell aussortiert.

Die Verwendung eines erfinderischen Klebebandes mit integrierter Schaltfunktion gewährleistet eine stete Erkennung ohne Applikation weiterer Etiketten. Somit ist jederzeit sichergestellt, daß eine Identifizierung der Verklebungsstelle möglich ist.

## Patentansprüche

1. Klebeband für den fliegenden Rollenwechsel von auf Rollen aufgewickeltem Flachbahnmaterial, ausgerüstet mit zumindest einem klebenden spaltbaren System (6), **dadurch gekennzeichnet, daß**
das Klebeband (1) mit zumindest einem mittels eines Detektors erkennbaren Transponder (T) ausgerüstet ist.

2. Klebeband nach Anspruch 1, **gekennzeichnet durch** zumindest einen Hauptträger (2), zumindest einer Schicht einer Selbstklebemasse (3) auf der Oberseite und zumindest einem klebenden spaltbaren System (6) auf der Unterseite.

3. Klebeband nach zumindest einem Anspruch 2, **dadurch gekennzeichnet**, das der Hauptträger (2) mit dem Transponder (T) ausgerüstet ist.

4. Klebeband nach zumindest einem der vorangehenden Ansprüche, **dadurch gekennzeichnet, daß**
als Transponder (T) ein Dünnschichttransponder verwendet wird

5. Spliceverfahren für den fliegenden Rollenwechsel von auf Rollen aufgewickelten Flachbahnmaterial, bei welchem die oberste Papierbahn (11) einer neuen Rolle mit einem Klebeband (1), welches mit zumindest einem Hauptträger (2), zumindest einer Schicht einer Selbstklebemasse (3) auf der Oberseite und zumindest einem spaltfähigen System (6) auf der Unterseite ausgerüstet ist, an der darunterliegenden Bahn (12) fixiert wird und ein zum Spliceverfahren benötigter Teil der Selbstklebemasse (3) offenliegt, woraufhin die so ausgerüstete neue Rolle neben eine fast gänzlich abgespulte zu ersetzende alte Rolle plaziert wird und auf die im wesentlichen gleiche Drehgeschwindigkeit wie diese beschleunigt wird, dann gegen die alte Bahn (13) gedrückt wird, wobei die offenliegende Selbstklebemasse (3) des Klebebandes (1) mit der alten Bahn (13) bei im wesentlichen gleichen Geschwindigkeiten der Bahnen verklebt, während zugleich das spaltfähige System (6) derart spaltet, daß nach dem Spaltvorgang keine klebenden Bereiche offenliegen, und wobei der Zeitpunkt des Splicevorganges durch einen Detektor bestimmt wird, **dadurch gekennzeichnet, daß**
das Klebeband (1) oder zumindest ein Teil hiervon einen Transponder (T) aufweist, welcher durch den Detektor erkannt wird.

6. Verfahren nach Anspruch 5, **dadurch gekennzeichnet, daß**
als Klebeband ein solches gemäß zumindest einem der Ansprüche 1 bis 3 verwendet wird.

## Claims

1. Adhesive tape for the flying reel change of flat web material wound up on reels, equipped with at least one cleavable adhesive system (6), **characterized in that** the adhesive tape (1) is equipped with at least one transponder (T) which can be detected by means of a detector.

2. Adhesive tape according to Claim 1, **characterized by** at least one main carrier (2), at least one layer of a self-adhesive compound (3) on the top and at least one cleavable adhesive system (6) on the bottom.

3. Adhesive tape according to at least Claim 2, **characterized in that** the main carrier (2) is equipped with the transponder (T).

4. Adhesive tape according to at least one of the preceding claims, **characterized in that** a thin-film transponder is used as transponder (T).

5. Splicing method for the flying reel change of flat web material wound up on reels, in which the uppermost paper web (11) of a new reel is fixed to the web (12) lying underneath with an adhesive tape (1), which is equipped with at least one main carrier (2), at least one layer of a self-adhesive compound (3) on the top and at least one cleavable system (6) on the bottom, and part of the self-adhesive compound (3) which is needed for the splicing process is exposed, whereupon the new reel equipped in this way is placed beside an old reel which has been unwound virtually completely and is to be replaced, and is accelerated to substantially the same rotational speed as the latter, is then pressed against the old web (13), the exposed self-adhesive compound (3) of the adhesive tape (1) bonding adhesively to the old web (13) at substantially the same speeds of the webs, while at the same time the cleavable system (6) cleaves in such a way that, following the cleaving operation, no adhesive regions are exposed, and the time of the splicing operation being determined by a detector, **characterized in that** the adhesive tape (1) or at least a part thereof has a transponder (T) which is detected by the detector.

6. Method according to Claim 5, **characterized in that** an adhesive tape according to at least one of Claims 1 to 3 is used as adhesive tape.

## Revendications

1. Bande adhésive pour le remplacement automatique de rouleaux de matériau en bande plane enroulé, pourvue d'au moins un système (6) adhésif dissociable, **caractérisée en ce que** la bande adhésive (1) est pourvue d'au moins un transpondeur (T) détectable au moyen d'un détecteur.

2. Bande adhésive selon la revendication 1, **caractérisée par** au moins un support principal (2), au moins une couche d'une masse auto-adhésive (3) sur la face supérieure et au moins un système (6) adhésif dissociable sur la face inférieure.

3. Bande adhésive selon au moins la revendication 2, **caractérisée en ce que** le support principal (2) est pourvu du transpondeur (T).

4. Bande adhésive selon au moins l'une des revendications précédentes, **caractérisée en ce qu'**un transpondeur à couche mince est utilisé en tant que transpondeur (T).

5. Procédé de raccordement pour le remplacement automatique de rouleaux de matériau en bande plane enroulé, dans lequel la bande (11) supérieure de papier d'un nouveau rouleau est fixée avec une bande adhésive (1), qui est pourvue d'au moins un support principal (2), d'au moins une couche d'une masse auto-adhésive (3) sur la face supérieure et d'au moins un système (6) dissociable sur la face inférieure, sur la bande (12) sous-jacente et une partie de la masse auto-adhésive (3) nécessaire pour le procédé de raccordement est accessible, suite à quoi le nouveau rouleau ainsi pourvu est placé à côté d'un ancien rouleau à remplacer, quasiment totalement déroulé et est accéléré essentiellement à la même vitesse de rotation que celui-ci, puis est comprimé contre l'ancienne bande (13), la masse auto-adhésive (3) accessible de la bande adhésive (1) étant collée avec l'ancienne bande (13) à des vitesses essentiellement identiques des bandes alors que le système (6) dissociable se dissocie simultanément de telle manière qu'il ne reste plus, après le processus de dissociation, de zones adhésives accessibles et le moment du processus de dissociation étant déterminé par un détecteur, **caractérisé en ce que** la bande adhésive (1) ou au moins une partie de celle-ci présente un transpondeur (T) qui est détecté par le détecteur.

6. Procédé selon la revendication 5, **caractérisé en ce que**, en tant que bande adhésive, on utilise une bande adhésive selon au moins l'une des revendications 1 à 3.
